(19) Europäisches Patentamt / European Patent Office / Office européen des brevets

(11) **EP 1 909 462 B1**

(12) **FASCICULE DE BREVET EUROPEEN**

(45) Date de publication et mention
de la délivrance du brevet:
**11.08.2010 Bulletin 2010/32**

(51) Int Cl.:
***H04L 29/06*** *(2006.01)*

(21) Numéro de dépôt: **07301379.9**

(22) Date de dépôt: **19.09.2007**

(54) **Procédé de mise à disposition cloisonnée d'un service électronique**

Verfahren zur unterteilten Bereitstellung eines elektronischen Dienstes

Method of compartmentalised provision of an electronic service

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **05.10.2006 FR 0654118**

(43) Date de publication de la demande:
**09.04.2008 Bulletin 2008/15**

(73) Titulaire: **Societé Française du Radiotéléphone
75008 Paris (FR)**

(72) Inventeur: **Wary, Jean-Philippe
92340 Bourg la Reine (FR)**

(74) Mandataire: **Schmit, Christian Norbert Marie
SCHMIT CHRETIEN
8, place du Ponceau
95000 Cergy (FR)**

(56) Documents cités:
**EP-A1- 1 303 153     WO-A-2005/076204**

## Description

L'invention a pour objet un procédé de mise à disposition cloisonnée d'un service électronique.

Le domaine de l'invention est celui des terminaux mobiles et plus particulièrement celui des services fournis via ces terminaux mobiles. Ici par terminal mobile on entend un téléphone mobile de deuxième génération ou d'une génération supérieure à la deuxième. Par extension un terminal mobile est tout dispositif communiquant via un réseau et transportable sans assistance par un être humain. Dans cette catégorie on inclut donc au moins les téléphones mobiles, les assistants personnels et les ordinateurs portables.

Un but de l'invention est la mise à disposition de services sur un terminal mobile en économisant les ressources de ce terminal.

Un autre but de l'invention est, sur un terminal donné, de mettre ce service à disposition d'une pluralité de consommateurs en économisant les ressources dudit terminal.

Un autre but de l'invention est de sécuriser la mise à disposition du service.

Dans l'état de la technique on connaît des plates-formes logicielles pour la téléphonie mobile qui permettent de proposer des services, autres que ceux de téléphonie mobile, sur des téléphones mobiles.

L'une de ces solutions consiste à câbler le service dans une puce qui est embarquée dans le téléphone. Dans ce cas le service est dédié à un prestataire et à un consommateur du service. Si on veut multiplier les services il faut alors multiplier les puces dans le téléphone, c'est-à-dire aussi multiplier les connecteurs ce qui devient vite très onéreux. Pourtant cette solution garantit un bon cloisonnement entre les services qui correspondent en fait tous à une puce différente donc tous à une mémoire physique différente. Mais le coût de mise en oeuvre de plus d'un service est dissuasif.

Une autre de ces solutions est une architecture purement logicielle mettant en oeuvre le concept de domaine de sécurité. Un domaine de sécurité est défini au niveau du système d'exploitation du téléphone mobile, ou d'une surcouche du système d'exploitation. Une telle surcouche est, par exemple, une machine virtuelle de type java. Le domaine de sécurité comporte au moins une zone mémoire divisée en une zone de programmes et une zone de données. Les mécanismes du système d'exploitation ou de la surcouche, garantissent que les codes instructions de la zone de programmes du domaine de sécurité ne peuvent accéder qu'aux données de la zone de données dudit domaine de sécurité. Cet accès au domaine de sécurité est de plus protégé par un ensemble de clés. Il existe ainsi plusieurs clés associées à un domaine de sécurité. Ainsi le domaine de la technique introduit la notion de jeu de clés ("keyset") qui participe à la protection du domaine de sécurité, chacune de ces clés est dédiée à un rôle ou une fonction sécurité très précise, suivant les besoins de sécurisation du domaine de sécurité. La liste de clés ou de fonctions sécurité suivante n'est pas exhaustive, mais, pour la sécurisation d'un domaine plusieurs clés peuvent être mises en oeuvre suivant les besoins de sécurité propre au domaine considéré. Ainsi, il peut exister une clé pour instancier des services dans le domaine de sécurité, une clé pour activer ces services, une clé pour authentifier les accès à ces services, une clé pour chiffrer les communications avec ces services et une clé pour modifier les paramètres du domaine de sécurité, c'est-à-dire pour modifier le contenu de la zone de données dudit domaine. Seule la connaissance de la bonne clé, ou d'un moyen d'accès à la bonne clé permet alors d'entreprendre l'action souhaitée.

Ces mécanismes permettent de garantir un bon cloisonnement des données entre les différents domaines de sécurité dans le cas où le système d'exploitation sous-jacent met en oeuvre le cloisonnement adéquat (notion de «firewalling» ou « sandbox » de Java). Mais cette solution présente au moins un inconvénient majeur. En effet un service est rendu à un consommateur qui tient à la confidentialité de ses données. Il faut donc, pour chaque consommateur, installer un domaine de sécurité distinct dans le mobile de chacun des utilisateurs du service. Donc, si un opérateur gérant le terminal mobile souhaite proposer le même service sécurisé à deux consommateurs différents, l'opérateur est obligé d'installer deux fois le domaine de sécurité sur le terminal de l'utilisateur et prévoir deux jeux de clés, un pour chacun des consommateurs. Ces installations se multiplient avec le nombre de services, et le nombre de consommateurs pour chacun ou l'ensemble de ces services. Cela a pour effet d'augmenter les ressources dont doit disposer un terminal mobile, donc d'augmenter son coût et/ou de diminuer ses performances pour un service donné.

Dans le cadre du monde de la carte à puce Java (JavaCard™) et de la plate-forme «Global Platform» (http://www.globalplatform.org/), la notion de domaine de sécurité est proposée, mais est confrontée à la même limitation, c'est-à-dire à l'obligation de multiplier les domaines de sécurité pour instancier plusieurs fois une même «applet» (application en méta langage coté client) sur des données différentes et pour lesquelles on doit garantir la confidentialité et le cloisonnement aux prestataires et aux consommateurs du service. Au niveau de l'état de l'art de la carte à puce Java, nous sommes passés d'un carte monoapplicative à une carte multiapplicative avec un modèle de type Global Platform, mais nous proposons dans notre invention de résoudre les problèmes identifiés précédemment en passant de la notion de Carte à puce Java multiapplicative à carte à puce Java multiapplicative multidonnées en permettant de propager le cloisonnement natif Java jusqu'au données gérées par une même application.

La demande européenne EP 1303153 divulgue un procédé de sélection de modules de programmes dans un téléphone mobile; la demande internationale WO 2005/076204 divulgue un dispositif de type carte à puce proposant une pluralité de domaines de sécurité.

L'objet de l'invention est de résoudre ces problèmes en proposant un procédé de mise à disposition cloisonnée d'un service électronique, sur un terminal électronique, à au moins un prestataire abonné au service, ledit prestataire proposant ce service à une pluralité de consommateurs via la mise en place, dans une étape préalable, d'un domaine de sécurité garantissant le cloisonnement du service et d'une zone de données à laquelle ledit service peut accéder, soit directement, soit au travers du traitement du service électronique, la zone de données du domaine de sécurité n'étant accessible que via une clé d'accès aux données. Dans l'invention, dans le domaine de sécurité, la zone de données à laquelle peut accéder le service sur le terminal électronique est, de manière remarquable, indexée en sous-zones pour garantir qu'une requête d'un consommateur de la pluralité de consommateurs ne puisse lire/écrire/modifier qu'une sous-zone prédéterminée associée au consommateur émetteur de la requête, soit directement, soit au travers du traitement du service électronique.

Ainsi on n'utilise que les ressources d'un domaine de sécurité pour proposer un service à au moins un prestataire proposant lui-même ce service à une pluralité de consommateurs[j1].

L'invention a donc comme objet un procédé de mise à disposition cloisonnée d'un service électronique, sur un terminal électronique, à au moins un prestataire abonné au service et proposant ce service à une pluralité de consommateurs via un domaine de sécurité garantissant le cloisonnement du service et d'une zone de données à laquelle ledit service peut accéder, la zone de données du domaine de sécurité n'étant accessible que via une clé d'accès aux données, caractérisé en ce que :

Dans le domaine de sécurité, la zone de données à laquelle peut accéder le service sur le terminal électronique est indexée en sous zone pour garantir qu'une requête d'un consommateur de la pluralité de consommateurs ne puisse lire/écrire/modifier qu'une sous zone prédéterminée associée au consommateur émetteur de la requête.

Dans une variante, le procédé selon l'invention est également caractérisé en ce que l'indexation est réalisée localement sur le terminal et par le service par la présentation au service par le consommateur d'au moins un identifiant permettant le déblocage de l'accès à la sous-zone de données associée au consommateur identifié par l'identifiant.

Dans une variante, le procédé selon l'invention est également caractérisé en ce que l'identification est suivie par une authentification basée sur une clé de chiffrement que le service est apte à produire à partir d'au moins l'identifiant du consommateur.

Dans une variante, le procédé selon l'invention est également caractérisé en ce que l'indexation est réalisée par un dispositif tiers caractérisé en ce que le dispositif tiers, sur réception d'une requête d'un consommateur, met en oeuvre les étapes suivantes:

- identification du service requis,
- identification du terminal sur lequel le service est requis,
- identification du consommateur,
- et en cas d'identification positive, émission d'une requête de mise à jour vers le terminal identifié pour prendre en compte la requête du consommateur.

Dans une variante, le procédé selon l'invention est également caractérisé en ce que l'identification du prestataire est suivie d'une authentification.

Dans une variante, le procédé selon l'invention est également caractérisé en ce que la requête de mise à jour est chiffrée avec la clé d'accès aux données.

Dans une variante, le procédé selon l'invention est également caractérisé en ce que le prestataire peut, au travers de requêtes spécifiques vers le service ou le système d'exploitation du domaine de sécurité ou le système d'exploitation du terminal, effectuer toutes les opérations de gestion de la zone de données indexée directement telles que création, initialisation, blocage, destruction, synchronisation des données entre différents consommateurs et/ou utilisateurs (la liste n'étant pas exhaustive), ces opérations de gestion pouvant être protégées par différentes clés ("keyset") connues du prestataire.

Dans une variante du dispositif, le procédé selon l'invention est remarquable en ce que l'indexation de la zone de donnée est réalisée à partir d'informations identifiant l'utilisateur de la zone sur le terminal. Il est ainsi possible de gérer plusieurs utilisateurs sur un même terminal pour un ou une pluralité de consommateurs auprès d'un même ou d'une pluralité de prestataires ou services. Cette variante permet, entre autres, la synchronisation d'informations entre une pluralité d'utilisateurs pour un ou une pluralité de consommateurs d'un même service.

L'invention sera mieux comprise à la lecture de la description qui suit et à l'examen des figures qui l'accompagnent. Celles-ci sont présentées à titre indicatif et nullement limitatif de l'invention. Les figures montrent :

Figure 1 : une illustration de dispositifs dont les mémoires sont structurées selon des étapes du procédé selon l'invention dans une mise en oeuvre locale ou distante,
Figure 2 : une illustration d'étapes du procédé selon l'invention dans une mise en oeuvre locale,
Figure 3 : également une illustration d'étapes du procédé selon l'invention dans une mise en oeuvre distante,
Figure 4 : une illustration d'une table d'indexation.

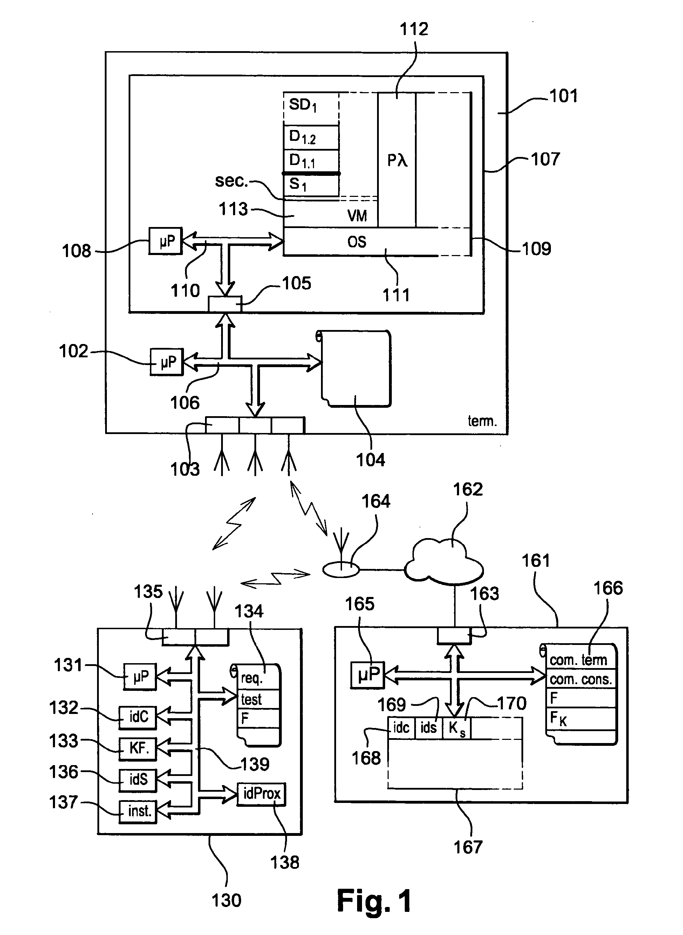

La figure 1 montre un terminal 101 mobile mettant en oeuvre le procédé selon l'invention. Dans notre exemple le terminal 101 est un téléphone mobile. Dans la pratique il peut s'agir de tous les dispositifs déjà cités dans le préambule. La figure 1 montre que le téléphone 101 comporte au moins un microprocesseur 102, des circuits 103 interfaces de communication, une mémoire 104 de programmes et un lecteur 105 de carte microcircuit. Les éléments 102 à 105 sont interconnectés par un bus 106.

Dans ce document lorsque l'on prête une action à un dispositif cette action est en fait réalisée par un microprocesseur dudit dispositif commandé par des codes instructions d'une mémoire de programmes dudit dispositif. Lorsque l'on prête une action à un programme, cette action correspond à l'exécution de tout ou partie des codes instruction d'une zone d'une mémoire de programmes, ladite zone correspondant alors au programme, par un microprocesseur du dispositif auquel appartient la mémoire de programmes dans laquelle est enregistré le programme.

Dans ce document on utilise le terme service pour désigner un programme correspondant à une offre de service vendu par un opérateur à un prestataire.

Ainsi, par exemple, un opérateur de téléphonie mobile vend à un prestataire de service un service de comptabilité de points de fidélité. Ce prestataire a à son tour des clients qui sont des consommateurs de service par exemple un boulanger, un vendeur de disque ou de biens quelconques, du service de comptabilité de points de fidélité. Ce consommateur du service peut à son tour proposer à ses clients finaux, en fait l'homme de la rue, une carte électronique de fidélité. Dans un terminal, le même service/programme, peut donc être utilisé pour plusieurs consommateurs, dans ce cas pour plusieurs boutiques.

Des exemples de services sont, outre celui qui vient d'être évoqué, des services de chiffrement de bout en bout, des services d'authentification mutuelle, des services de gestion de droits électroniques, des services de paiement, des services de signatures électroniques,..., la liste n'étant pas exhaustive.

Dans une variante de l'invention, le prestataire se confond avec l'opérateur de téléphonie lui-même.

Les circuits 103 permettent au téléphone 101 de communiquer selon des normes variées aux nombres desquelles les normes de téléphonies mobiles et ce dans tous les modes voix/data, ainsi que des normes de communications locales comme BlueTooth®, Wifi, mais aussi les normes dites sans contact comme le RFID/NFC.

Les circuits 105 permettent au téléphone 101 de s'interfacer avec une carte 107 SIM/USIM (Subscriber Identification Module pour module d'identification de l'abonné/UMTS). La carte 107 comporte au moins un microprocesseur 108 et une mémoire 109 de programme. Les éléments 105, 108 et 109 sont interconnectés via un bus 110.

La mémoire 109 comporte classiquement une zone 111 comportant des codes instructions correspondant à un système d'exploitation. Le système d'exploitation permet à des programmes installés sur la carte 107 d'accéder aux ressources (communications, système de fichiers,...) de la carte 107. Tous les programmes installés sur la carte 107 font donc des appels à des fonctions du système d'exploitation 111.

La figure 1 montre une zone 112 de la mémoire 109 correspondant à un programme «lambda» et comportant donc des codes instructions directement connectés au système d'exploitation 111.

Dans l'invention on utilise le mécanisme connu de domaine de sécurité. Ce mécanisme implique la mise en oeuvre de fonctionnalités supplémentaires dans le système d'exploitation. Ces mécanismes sont réalisés, dans la pratique, par une machine virtuelle, par exemple une machine virtuelle Java. La figure 1 montre une telle machine 113 virtuelle. Dans le principe cette machine virtuelle est un intermédiaire entre des appels réalisés par un programme écrit pour la machine virtuelle et le système d'exploitation sur lequel est installée la machine virtuelle.

Dans la pratique les machines virtuelles savent créer des domaines de sécurité, c'est-à-dire que les domaines de sécurité peuvent être créés à la mise en production de la carte ou dynamiquement après la phase de mise en production de la carte. La figure 1 montre un domaine SD1 de sécurité. Le domaine SD1 est une zone de la mémoire 109. Le domaine SD1 comporte une zone S1 correspondant à des codes instructions interprétables par la machine 113 et correspondant à la réalisation d'un service tel que ceux précédemment évoqués.

Le domaine SD1 comporte aussi une zone de données. Dans l'invention cette zone de données est subdivisée en sous-zones D1.1, D1.2 à D1.n. Le mécanisme de domaine de sécurité garantit que seuls les codes instructions de la zone S1 peuvent accéder aux données de la zone de données de SD1. L'invention permet d'associer chaque sous-zone D1.x à un consommateur donné. Selon le consommateur qui invoquera le service S1, seule une sous-zone sera accessible. Chaque service, et donc chaque domaine de sécurité, est identifié par un identifiant de service Sx. Chaque consommateur est identifié par un identifiant de consommateur idC.

Pour cela la machine 113, et/ou la zone S1, comportent des codes instructions enregistrés dans une zone SEC et dédiés à la vérification de la validité d'une requête adressée au service S1, ou d'une manière générale au service Sx. Chaque domaine de sécurité a sa zone SEC propre. Les codes enregistrés dans la zone SEC garantissent donc l'indexation de la zone de données.

Lorsque l'on dit que le service S1 communique avec l'extérieur, il le fait à travers la carte 107 SIM et le téléphone 101.

La figure 1 montre un dispositif 130 consommateur utilisé par un consommateur souhaitant envoyer des requêtes au service S1. Le dispositif 103 comporte un microprocesseur 131, une mémoire 132 d'identifiant, une mémoire 133 de clés de chiffrement, d'authentification, une mémoire 134 de programmes et des circuits 135 d'interfaces de communication. Le dispositif 130 comporte aussi une mémoire 136 d'identification d'un service, une mémoire 137 d'instructions et, dans une variante, une mémoire 138 d'identification d'un serveur mandataire.

Les éléments 131 à 138 sont interconnectés via un bus 139. Les circuits 135 sont de même nature que les circuits 103 et compatibles avec au moins une des normes parmi celle mises en oeuvre par les circuits 103.

La mémoire 134 comporte au moins des codes instructions pour l'émission d'une requête au service S1. Dans une variante de l'invention la mémoire 134 comporte aussi des codes instructions pour pouvoir relever un challenge d'authentification soumis par le service S1. Dans une variante la mémoire 134 comporte des codes instructions pour la mise en oeuvre d'une fonction F de chiffrement, symétrique ou asymétrique.

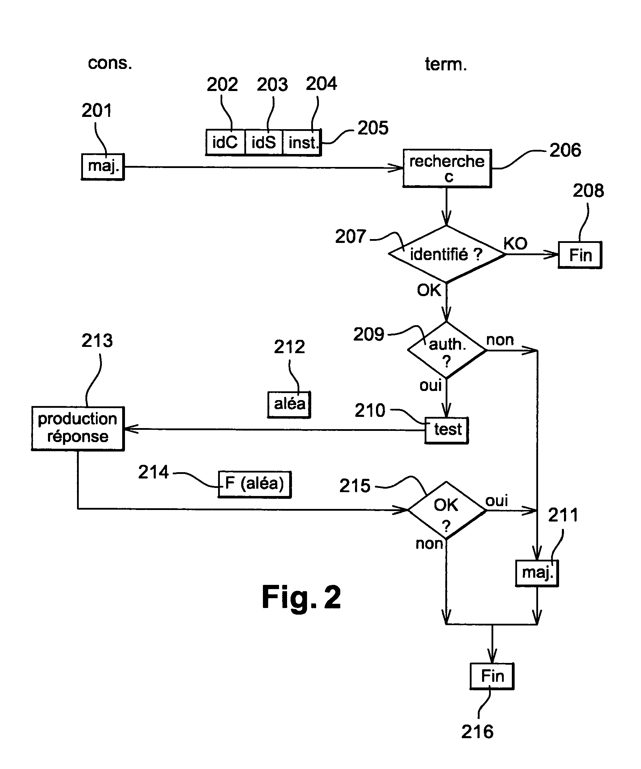

La figure 2 illustre des étapes du procédé selon l'invention dans le cas ou l'indexation de la zone de données du domaine de sécurité SD1 est gérée localement par la carte 107 SIM.

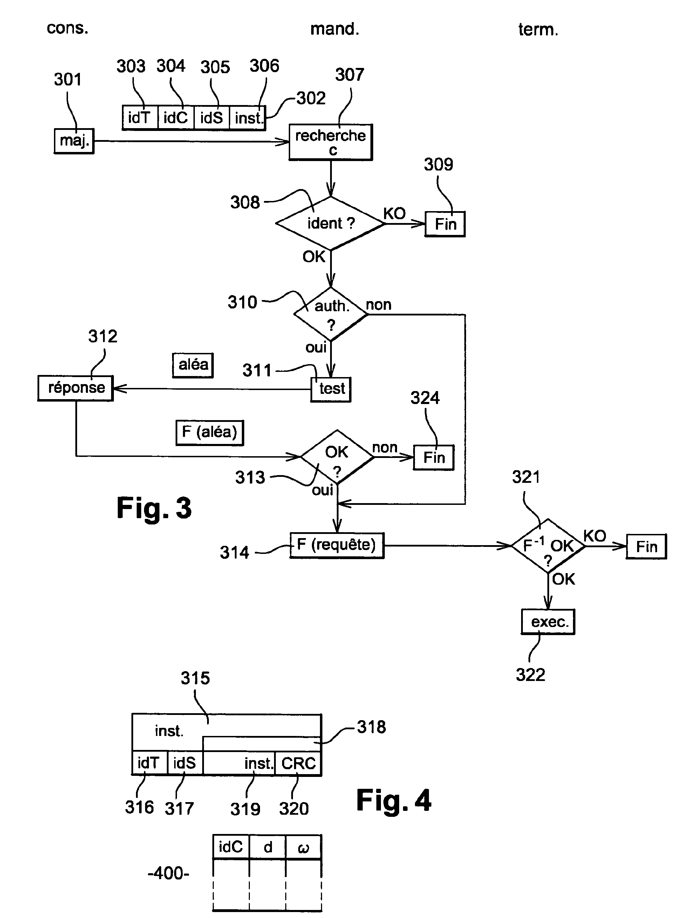

Préalablement à la mise en oeuvre des étapes qui vont être décrites pour les figures 2 et 3, un opérateur a mis en oeuvre une étape d'installation des services dans la carte 107. Dans cette étape l'opérateur structure la mémoire 109 comme décrit pour la figure 1. C'est-à-dire que l'opérateur installe dans la mémoire 109 au moins un domaine de sécurité tel que le domaine SD1.

La figure 2 montre une étape 201 dans laquelle un consommateur active le dispositif 130 pour interagir avec le téléphone 101. Cette activation est réalisée, par exemple, via une interface mécanique de commande alors qu'un porteur du téléphone 101 approche ce dernier du dispositif 130. Dans ce cas, la communication entre le dispositif 130 et le téléphone 101 se fait, de manière non limitative, via des mécanismes du type RFID/NFC, ou des mécanismes de type infrarouge ou Bluetooth® ou tout autre moyen de communication de proximité ou au travers de communications Data transportées sur une infrastructure de réseau mobile ou fixe.

Le dispositif 130 produit une requête 205 comportant au moins un identifiant 202 du consommateur, un identifiant 203 du service et un code 204 instruction. Dans notre exemple ces informations sont émises via une seule requête. Dans la pratique elles pourraient l'être via un échange de requêtes entre le dispositif 130 et le téléphone 101. Les informations utiles à la production de la requête 205 sont lues dans les mémoires 132, 136 et 137. Ces mémoires sont mises à jour par l'opérateur/ prestataire au moment où il fournit le dispositif 130 au consommateur. Le contenu du champ 204 peut varier en fonction d'une volonté du consommateur et via un paramétrage du dispositif 130. Au contraire les champs 202 et 203 sont sous le contrôle du prestataire, de même que la mémoire 133.

La requête 205 une fois produite est émise vers le téléphone 101.

Dans une étape 206 le téléphone 101 reçoit la requête 205 et la transmet à la carte 107 qui la traite. Ce traitement consiste au moins à lire le champ 203 pour identifier un service et donc un domaine de sécurité. Si le service désigné par le champ 203 existe alors la requête 205 est traitée par ce service. Considérons ici qu'il s'agit, par exemple, du service S1. Le service S1 traite alors la requête 205. Si le service désigné par la requête 205 n'est pas trouvé, alors cette requête est tout simplement ignorée. Le traitement de la requête 205 par le service S1 consiste au moins dans un premier temps à lire le champ 202 et à rechercher si une zone D1.x correspond au consommateur ainsi désigné. Cette recherche correspond en fait à une identification réalisée lors d'une étape 207. Si le service ne parvient pas à identifier un consommateur alors on passe à une étape 208 de fin revenant à ignorer la requête 205, sinon on passe à une étape 209 de test d'une authentification

L'étape 209 est une variante de l'invention. Dans l'étape 209 le service teste si, par configuration, la mise en oeuvre du service requiert une authentification après l'identification. Si c'est le cas, le service S1 passe à une étape 210 d'authentification du consommateur, sinon il passe à une étape 211 d'exécution du code instruction décrit dans le champ 204.

Dans l'étape 210, le service procède à une authentification implicite ou explicite à sens unique ou mutuelle du consommateur au travers de un ou plusieurs échanges. Une authentification implicite est une authentification basée sur la réception/transmission d'une valeur résultat d'une opération cryptographique établissant la possession dudit secret d'authentification par l'entité devant être authentifiée.

Dans une variante préférée de l'étape 210 la carte 109 produit un message 212 de challenge comportant un aléa. Ce message 212 est reçu dans une étape 213 par le dispositif 130. Dans l'étape 213 le dispositif 130 chiffre l'aléa avec la fonction F connue du dispositif 130 et avec la clé de la mémoire 133. Dans une variante de l'étape 213, le dispositif 130 calcule une diversification de la clé de la mémoire 133 à partir de la valeur de l'aléa et d'une fonction de diversification ou de «hashage» ou à sens unique F connue du dispositif 130. La clé de la mémoire 133 est en fait une clé Kf fille d'une clé Ks du jeu de clés («keyset») associé au domaine de sécurité SD1. On a donc :

$$Kf = Fk\,(idC,\,Ks)$$

où idC est le contenu de la mémoire 132.

A l'installation du domaine de sécurité la carte 109 connaît Ks. Selon cette variante de l'invention le service S1 connaît Fk et F. Ces fonctions Fk sont installées en même temps que les domaines de sécurité de la mémoire 109. Enfin, grâce à la requête 205 le service S1 connaît idC.

A la fin de l'étape 213 le dispositif 130 émet un message 214 de réponse comportant F(aléa, Kf).

Dans une étape 215 le service S1 reçoit, via la carte 107 et le téléphone 101 le message 214. Le service S1 compare alors le contenu du message 214 à son propre calcul F(aléa, Fk(idC, Ks)). Si ces calculs sont égaux alors le service S1 passe à l'étape 221, sinon il passe à une étape 216 de fin et la requête 205 est ignorée.

Dans l'étape 211 le service S1 exécute la ou les instructions décrites dans le champ 204. Cette exécution implique des lectures et/ou écritures dans la zone de données du domaine de sécurité. Dans l'invention, le service S1 associe à chaque identifiant de consommateur une sous-zone de la zone de données. Cette association se fait, par exemple, via la zone SEC correspondant au domaine de sécurité ou directement par le service S1. Cette zone décrit alors, pour chaque identifiant de consommateur la sous-zone dans laquelle il faut lire/écrire/modifier. Toute tentative pour lire ou écrire à l'extérieur de cette sous-zone entraînerait un refus d'exécution de la part de la machine virtuelle.

Dans une variante de l'invention l'instruction reçue via le champ 204 est chiffrée avec la clé Kf de la mémoire 133 et la fonction F. Cette instruction ne peut donc être correctement exécutée qui si le consommateur s'est correctement identifié et s'il a fourni les bons éléments au service S1 pour décoder l'instruction. Un tel mécanisme de chiffrement sera décrit dans la variante illustrée par la figure 3.

La figure 3 illustre une variante de l'invention dans laquelle la mise à jour / lecture d'une sous-zone d'un domaine de sécurité se fait via un serveur mandataire d'un prestataire ayant proposé un service à des consommateurs de service.

La figure 1 illustre un tel serveur 161 mandataire. Le serveur 161 est connecté à un réseau 162 via des circuits 163 interface. Le dispositif 130 est apte à se connecter au réseau 162 via, par exemple, une station de base 164 d'un réseau de téléphonie mobile, le réseau pouvant être également un réseau fixe ou directement Internet. Le dispositif 130 et le serveur 161 peuvent donc communiquer.

Le serveur 161 comporte un microprocesseur 165, une mémoire 166 de programme et une mémoire 167 de configuration.

La mémoire 166 comporte des codes instructions pour la mise en oeuvre d'une communication avec le dispositif 130, des codes instructions pour la mise en oeuvre d'une communication avec les services installés dans la carte SIM 107 du téléphone 101, des codes instructions pour la mise en oeuvre d'une fonction F de chiffrement symétrique et des codes instructions pour la mise en oeuvre d'une fonction Fk de production d'une clé Kf de chiffrement.

Dans cette variante de l'invention, la zone SEC de sécurité des domaines de sécurité installés sur la carte 109 connaît et est apte à mettre en oeuvre la fonction F. La mémoire 133 comporte la valeur

$$Kf = Fk\,(idC,\ Ks)$$

chacun de ces symboles ayant été précédemment décrits.

La mémoire 167 correspond en fait à une table, chaque ligne de la table correspondant à un consommateur. Chaque ligne comporte donc au moins un champ 168 identifiant de consommateur, un champ 169 identifiant de service et un champ 170 clé de chiffrement. Le contenu du champ 170 est en fait une des clés du jeu de clés associé au domaine de sécurité dans lequel est mis en oeuvre le service identifié par le champ 169.

La figure 3 montre une étape 301 dans laquelle un utilisateur du dispositif 130 produit et émet une requête 302 pour accéder à un service installé sur le téléphone 101. Cette requête comporte plusieurs champs dont au moins un champ 303 identifiant du terminal 101, un champ 304 identifiant du consommateur, un champ 305 identifiant d'un service et un champ 306 décrivant un code instruction à faire exécuter par le service identifié par le contenu du champ 305. Cette requête 302 une fois produite est émise vers le serveur 161 dont le dispositif 130 connaît l'adresse via le contenu du champ 138. Cette émission se fait en mode données (protocole de type TCP/IP), ou via un message court (protocole de type SMS/MMS).

Comme pour l'étape 201 les informations décrites pour la trame 302 seront émises par le dispositif 130. Cependant ces informations peuvent être émises en une seule trame comme décrit, ou en plusieurs trames au cours d'un dialogue entre le dispositif 130 et le serveur 161.

Le contenu du champ 303 est, dans un exemple préféré, un numéro de téléphone (MSISDN) permettant de joindre le téléphone 101. Ce numéro de téléphone est obtenu par le dispositif 130, soit au cours d'une saisie, soit au cours d'un dialogue entre le téléphone 101 et le dispositif 130. De manière non limitative le contenu du champ 303 pourrait être n'importe quel identifiant réseau de l'abonné, un IMSI ou l'IMEI dans le cadre d'un réseau mobile, mais aussi un identifiant de la carte à puce de l'abonné de type ICCID ou la trame TAR obtenue par le téléphone au «boot» de la carte à puce, cet identifiant pouvant aussi être basé sur tout moyen d'identification de l'utilisateur auprès de l'opérateur de raccordement : une adresse IPv6, une adresse éthernet, voire une adresse mail, un identifiant de type SIP ou VoIP, un identifiant de type ENUM ou toute autre identité électronique étant aussi envisageable.

Dans une étape 307 le serveur 161 entreprend une recherche dans la table 167. Cette recherche est une identification 308 du consommateur ayant émis la requête 302. Cette recherche consiste à rechercher une ligne de la table 167 dont les champs 168 et 169 sont égaux aux champs 304 et 305. Si une telle ligne L est trouvée alors l'identification est positive, sinon l'identification est négative et le serveur 161 passe à une étape 309 dans laquelle il ignore la requête 302.

En cas d'identification positive le serveur 161 passe à une étape 310 de test d'authentification. Cette étape consiste à déterminer si une authentification est requise en plus de l'identification. Cette étape est optionnelle et peut être réalisée via un champ de configuration de la ligne L. Si ce champ vaut 1, par exemple, alors l'authentification est requise, sinon l'authentification n'est pas requise.

Si l'authentification est requise le serveur passe à une étape 311 de soumission d'un challenge au dispositif 130. L'étape 311 est identique à l'étape 210 déjà décrite et est suivie des étapes 312, 313 et 314 identiques aux étapes 213, 215 et 216. Dans ce cas, cependant, les étapes 312, 313 et 314 sont mises en oeuvre par le serveur 161 et non par la carte 107.

En cas de succès de la demande d'authentification soumise par le serveur 161, le serveur passe à une étape 314 de production d'une requête 315 instruction.

Dans un exemple préféré, la requête instruction 315 comporte au moins, dans un en-tête, un champ 316 identifiant le téléphone destinataire de la requête instruction. La requête est émise, par exemple, via un message court ou via toute autre moyen de communication dépendant du type d'identifiant réseau utilisé, le champ 316 comporte la valeur reçue par le serveur 161 via le champ 303.

La requête 315 comporte aussi un champ 317 identifiant de service dont le contenu correspond au contenu du champ 169 de la ligne L trouvée à l'étape 308.

La requête 315 comporte aussi un champ 318 chiffré par la fonction F en utilisant la clé Ks du champ 170 de la ligne L. En clair, le champ 318 comporte au moins un champ 319 décrivant l'instruction à exécuter et de manière optionnelle un champ 320 de type somme de contrôle (CRC). Le champ 320 comporte une somme du contrôle du champ 319.

La clé Ks est en fait la clé d'accès aux données du jeu de clés du domaine de sécurité dans lequel le service identifié par le champ 169 est exécuté.

Le champ 319 peut être plus complexe en comportant une série d'instructions et/ou des paramètres pour l'instruction. Le champ 319 comporte de manière implicite, ou explicite, une identification du consommateur ayant émis la requête ayant conduit à la production de l'instruction 315. Cette identification est, par exemple, un identifiant permettant au service identifié par le champ 317 de déterminer une sous-zone de la zone de données du domaine de sécurité dans lequel s'exécute le service. Cette identification est de manière implicite, par exemple, contenue dans les paramètres de la ou les instructions à exécuter. Ces paramètres désignent en effet des données à mettre à jour ou à lire. Le serveur 161 utilise sa connaissance de l'identité du consommateur pour produire des instructions, pour le champ 319, qui ne lisent et écrivent que dans une sous-zone attribuée au consommateur identifié à la ligne L. La connaissance de cette sous-zone est alors stockée dans la ligne L. Dans une variante la connaissance de cette sous-zone est stockée dans la zone SEC du domaine de sécurité.

Une fois la requête instruction 315 produite elle est émise vers le téléphone 101 qui la reçoit dans une étape 321 et la transmet à la carte 107. La carte 107 utilise alors le contenu du champ 317 pour transmettre la requête 315 au service identifié par le champ 317 s'il existe, sinon la requête 315 est ignorée. On considère dans notre exemple qu'il s'agit du service S1.

Dans l'étape 321 le service S1 utilise la clé Ks pour déchiffrer le champ 318. Puis le service S1 calcule une somme de contrôle du contenu du champ 319 déchiffré et compare le résultat de cette somme au contenu du champ 320 déchiffré, si l'option somme de contrôle (CRC) est mise en oeuvre. Si cette comparaison est une égalité alors le service S1 passe à une étape 322 d'exécution des instructions décrites par le contenu du champ 319 déchiffré, sinon la requête 315 est ignorée par le service.

Dans cette variante l'indexation des données est donc assurée par un serveur tiers qui garantit par les instructions qu'il envoie à un service donné, après avoir identifié et/ou authentifié un consommateur, que ce consommateur n'a accès qu'aux données le concernant.

Dans une variante le dispositif consommateur est en fait une application installée dans la mémoire 104 de programme du terminal 101 (par exemple une application de messagerie, ou une application de type «player multimédia» devant gérer des données relatives à la DRM et des flux de streaming chiffrés, ou une application d'échange/partage de données multimédia, ou encore une application de type téléphonie ou visiophonie sur IP),. Ce programme peut alors avoir besoin de services de chiffrement, ou de service de gestion de droit pour permettre à l'utilisateur du téléphone 101 de communiquer avec un ou plusieurs serveurs de contenu. Dans ce cas, l'application s'identifie comme un consommateur et n'a accès qu'à une sous-zone de la zone de données du domaine de sécurité dans lequel est exécuté le service de chiffrement ou de gestion de droit. Dans le cas d'une application générique c'est le serveur de contenu qui fournit à l'application générique les informations lui permettant de s'identifier comme service.

Dans l'invention plusieurs domaines de sécurité, donc plusieurs services, peuvent coexister sur la même carte SIM. Il est donc possible de proposer le même service à plusieurs consommateurs via un seul domaine de sécurité. Il est aussi possible de rendre plusieurs services à plusieurs consommateurs via plusieurs domaines de sécurité.

Dans une variante du dispositif, le procédé selon l'invention est remarquable en ce que l'indexation de la zone de donnée est réalisée à partir d'informations identifiant l'utilisateur de la zone sur le terminal. Il est ainsi possible de gérer plusieurs utilisateurs sur un même terminal pour un ou une pluralité de consommateurs auprès d'un même ou d'une pluralité de prestataires ou services. Cette variante permet, entre autres, la synchronisation d'informations entre une pluralité d'utilisateurs pour un ou une pluralité de consommateurs d'un même service.

Dans la pratique les domaines de sécurité sont mis en oeuvre via une plateforme java. On utilise alors une machine virtuelle java. Les programmes correspondant aux services s'appellent alors des "applets" ou application java s'exécutant sur un dispositif client.

Comme on l'a déjà décrit, l'indexation d'une zone de données d'un domaine de sécurité est réalisée soit localement par le service, soit à distance par un serveur mandataire. Dans les exemples décrits cette indexation se fait via une "table d'allocation" 400 associant un identifiant de consommateur à une description d'une zone mémoire. Une telle description correspond, par exemple, à des adresses de début et de fin de la zone mémoire. Dans une variante de l'invention on considère que chaque sous-zone a la même taille. Une zone de données est alors vue comme un tableau, chaque case du tableau correspondant alors à une sous-zone. Dans ce cas, un simple index permet d'accéder directement à la bonne sous-zone. Dans encore une autre variante on utilise une indexation séquentielle, chaque sous-zone stockant un identifiant de consommateur, l'élection de la bonne sous-zone se faisant alors par un parcours séquentiel des sous-zones jusqu'à ce que l'on trouve le bon identifiant. Les codes instructions produits prennent en compte le mode d'indexation.

Dans l'invention les applets, et les domaines de sécurité, sont installés par l'opérateur ayant fourni la carte SIM. Cela permet à l'opérateur de garantir la qualité et l'innocuité des codes via différents procédés d'analyse formelle. Cela permet aussi à l'opérateur de préformater les zones de données des zones de sécurité.

Pour la maintenance de ces applications le procédé selon l'invention permet à l'opérateur/prestataire, au travers de requêtes spécifiques vers le service ou le système d'exploitation du domaine de sécurité ou le système d'exploitation du terminal, effectuer toutes les opérations de gestion de la zone de données indexée directement, telles que création, initialisation, blocage, destruction, synchronisation des données entre différents consommateurs et/ou utilisateurs, ..., ces opérations de gestion pouvant être protégées par différentes clés connues du prestataire.

Dans la mesure ou l'opérateur/prestataire connaît tout ou partie du jeu de clés associé à un domaine de sécurité il peut, comme dans le cas décrit pour l'indexation à distance, produire une instruction qui sera reconnue et exécutée par le service qui doit être maintenu. Dans une variante, pour la maintenance, l'opérateur/prestataire s'identifie/authentifie comme un super consommateur auquel le domaine de sécurité accorde tous les droits sur l'ensemble de sa zone de données.

## Revendications

1. Procédé de mise à disposition cloisonnée d'un service (S1) électronique, sur un terminal (101) électronique d'un utilisateur, à au moins un prestataire (161) abonné au service, ledit prestataire proposant ce service à une pluralité de consommateurs (130) via la mise en place, dans une étape préalable, d'un domaine (SD1) de sécurité garantissant le cloisonnement du service et d'une zone (D1) de données à laquelle ledit service peut accéder, soit directement, soit au travers un traitement du service électronique, la zone de données du domaine de sécurité n'étant accessible que via une clé d'accès aux données, **caractérisé en ce qu'**il comporte les étapes suivantes:

    - le terminal indexe (211, 314), dans le domaine de sécurité, la zone de données à laquelle peut accéder le service sur le terminal électronique en sous-zones pour garantir qu'une requête (205, 302) d'un consommateur de la pluralité de consommateurs ne puisse lire/écrire/modifier qu'une sous-zone (D1.x) prédéterminée associée au consommateur émetteur de la requête, soit directement, soit au travers du service électronique.

2. Procédé selon la revendication 1 **caractérisé en ce que** l'indexation est réalisée localement (211) sur le terminal et par le service par la présentation au service par le consommateur d'au moins un identifiant permettant le déblocage de l'accès à la sous-zone de données associée au consommateur identifié par l'identifiant.

3. Procédé selon la revendication 2, **caractérisé en ce que** l'identification (207) est suivie par une authentification (209, 210, 212-215) basée sur une clé de chiffrement que le service est apte à produire à partir d'au moins l'identifiant du consommateur.

4. Procédé selon la revendication 1 **caractérisé en ce que** l'indexation est réalisée par un dispositif (161) tiers **caractérisé en ce que** le dispositif tiers, sur réception d'une requête d'un consommateur, met en oeuvre les étapes suivantes :

    - identification du service requis,
    - identification du terminal sur lequel le service est requis,
    - identification du consommateur,
    - et en cas d'identification positive, émission d'une requête de mise à jour vers le terminal identifié pour prendre en compte la requête du consommateur.

5. Procédé selon la revendication 4, **caractérisé en**

**ce que** l'identification (308) du prestataire est suivie d'une authentification (310-313).

6. Procédé selon l'une des revendications 4 ou 5, **caractérisé en ce que** la requête de mise à jour est chiffrée (314) avec la clé d'accès aux données.

7. Procédé selon l'une des revendications 1 à 6, **caractérisé en ce que** le prestataire peut, au travers de requêtes spécifiques vers le service ou le système d'exploitation du domaine de sécurité ou le système d'exploitation du terminal, effectuer toutes les opérations de gestion de la zone de données indexée directement, telles que création, initialisation, blocage, destruction, synchronisation des données entre différents consommateurs et/ou utilisateurs, ..., ces opérations de gestion pouvant être protégées par différentes clés connues du prestataire.

8. Procédé selon l'une des revendications 1 à 7, **caractérisé en ce que** l'indexation de la zone de donnée est réalisée à partir d'informations identifiant l'utilisateur de la zone sur le terminal, pour un ou une pluralité de consommateurs auprès d'un même ou d'une pluralité de prestataires ou services.

9. Mise en oeuvre du procédé selon l'une des revendications 1 à 8 dans une carte (107) microcircuit (carte SIM) d'un téléphone mobile.

**Claims**

1. Method for providing in a compartmentalized manner an electronic service (S1), at an electronic terminal (101) of a user, to at least one provider (161) having subscribed to the service, said provider proposing this service to a plurality of consumers (130) through the implementation, in a previous step, of a security domain (SD1) guaranteeing the compartmentalization of the service and of a data zone (D1) to which said service can access either directly or through a treatment of the electronic service, the data zone of the security domain being accessible only by means of a data access key, **characterized in that** it comprises the following steps:

   - in the security domain, the terminal indexes (211, 314) the data zone, to which the service can access at the electronic terminal, into subzones for guaranteeing that a request (205, 302) from a consumer among the plurality of consumers can read/write/modify only one predetermined sub-zone (D1.x) associated to the requesting consumer either directly or through the electronic service.

2. Method according to claim 1, **characterized in that** the indexation is made locally (211) at the terminal and by the service, the consumer providing therefore to the service at least one identifier for unblocking access to the data sub-zone associated to the consumer identified by means of the identifier.

3. Method according to claim 2, **characterized in that** the identification (207) is followed by an authentication (209, 210, 212-215) based on a ciphering key the service is able to produce from at least the identifier of the consumer.

4. Method according to claim 1, **characterized in that** the indexation is made by a third device (161) **characterized in that** the third device performs the following steps on receiving a request from the consumer:

   - the identification of the required service,
   - the identification of the terminal at which the service is required,
   - the identification of the consumer,
   - and, if the identification is positive, the emission of an actualization request to the identified terminal for taking into account the request from the consumer.

5. Method according to claim 4, **characterized in that** the identification (308) of the provider is followed by an authentication (310-313).

6. Method according to any one of the claims 4 or 5, **characterized in that** the actualization request is ciphered (314) with the data access key.

7. Method according to any one of the claims 1 to 6, **characterized in that**, through specific requests to the service or the operating system of the security domain or the operating system of the terminal, the provider can carry out all the management operations for the data zone directly indexed, such as creation, initialization, blockage, destruction, synchronization of the data among various consumers and/or users, ---, these management operations being possibly protected by different keys known by the provider.

8. Method according to any one of the claims 1 to 7, **characterized in that** the indexation of the data zone is made from identification information concerning the user of the zone at the terminal, for one consumer or a plurality of consumers of the same provider or service or of a plurality of providers or services.

9. Implementation of the method according to any one of the claims 1 to 8 in a microcircuit card (SIM card) (107) of a mobile phone.

**Patentansprüche**

1. Verfahren zur Stellung eines elektronischen Diensts (S1) auf eine kompartimentierte Weise an einem elektronischen Terminal (101) eines Benutzers zur Verfügung mindestens eines an diesem Dienst teilnehmenden Anbieters (161), wobei der genannte Anbieter einer Vielzahl von Verbrauchern (130) diesen Dienst vorschlägt, indem er in einem vorhergehenden Schritt einen Sicherheitsbereich (SD1) vorsieht, welcher die Kompartimentierung des Diensts und einer Datenzone (D1) gewährleistet, auf welche der genannte Dienst entweder unmittelbar oder durch eine Verarbeitung des elektronischen Diensts einen Zugriff finden kann, wobei der Zugriff auf die Datenzone des Sicherheitsbereichs nur mittels eines Datenzugriffschlüssels möglich ist, **dadurch gekennzeichnet, dass** es die folgenden Schritte aufweist:

   - das Terminal indexiert (211, 314) im Sicherheitsbereich die Datenzone, auf welche der Dienst am elektronischen Terminal einen Zugriff finden kann, zu unterzonen, um zu gewährleisten, dass ein Antrag (205, 302) von einem Verbraucher einer Vielzahl von Verbrauchern unmittelbar oder durch den elektronischen Dienst nur eine vorbestimmte Unterzone (D1.x) lesen/schreiben/verändern kann, welche mit dem den Antrag einreichenden Verbraucher verbunden ist.

2. Verfahren nach Anspruch 1, **dadurch gekennzeichnet, dass** die Indexierung lokal am Terminal und durch den Dienst durchgeführt wird, wobei der Verbraucher dafür dem Dienst mindestens eine Kennzeichnung liefert, welche die Freigabe des Zugriffs auf die mit dem mit der Kennzeichnung **gekennzeichneten** Verbraucher verbunden Unterdatenzone erlaubt.

3. Verfahren nach Anspruch 2, **dadurch gekennzeichnet, dass** nach dem Kennzeichnen (207) eine Authentisierung (209, 210, 212-215) durchgeführt wird, welche auf einen Chiffrierungsschlüssel basiert, welchen das Dienst mindestens aus der Kennzeichnung des Verbrauchers erzeugen kann.

4. Verfahren nach Anspruch 1, **dadurch gekennzeichnet, dass** die Indexierung von einer dritter Vorrichtung (161) durchgeführt wird, welche **dadurch gekennzeichnet ist, dass** beim Empfang eines Antrags von einem Verbraucher die dritte Vorrichtung die folgenden Schritte durchführt:

   - das Kennzeichnen des beantragten Diensts,
   - das Kennzeichnen des Terminals, an welchem das Dienst beantragt wird,
   - und bei positivem Kennzeichnen wird ein Aktualisierungsantrag zum kennzeichneten Terminal übertragen, um den Antrag von einem Verbraucher zu berücksichtigen.

5. Verfahren nach Anspruch 4, **dadurch gekennzeichnet, dass** nach dem Kennzeichnen (308) des Anbieters eine Authentisierung (310-313) durchgeführt wird.

6. Verfahren nach einem der Ansprüche 4 oder 5, **dadurch gekennzeichnet, dass** der Aktualisierungsantrag mit dem Datenzugriffschlüssel chiffriert (314) wird.

7. Verfahren nach einem der Ansprüche 1 bis 6, **dadurch gekennzeichnet, dass** durch spezifische Anträge zum Dienst oder Betriebssystem des Sicherheitsbereichs oder Betriebsystem des Terminals der Anbieter alle Verwaltungsarbeiten für die unmittelbar indexierte Datenzone, wie Erzeugung, Initialisierung, Blockierung, Zerstörung, Synchronisierung der Daten unter verschiedenen Verbrauchern und/order Benutzern, ---, durchführen kann, wobei diese Verwaltungsarbeiten mit verschiedenen vom Anbieter bekannten Schlüsseln geschützt werden können.

8. Verfahren nach einer der Ansprüche 1 bis 7, **dadurch gekennzeichnet, dass** die Indexierung der Datenzone aus Kennzeichnungsinformationen über den Benutzer der Zone am Terminal durchgeführt wird, für einen Verbraucher oder eine Vielzahl von Verbrauchern beim selben Anbieter oder Dienst bzw. bei einer Vielzahl von Anbietern oder Diensten.

9. Durchführung des Verfahrens nach einer der Ansprüche 1 bis 8 in einer Mikroschaltungskarte (107) (SIM-Karte) eines Mobiltelefons.

**Fig. 1**

cons.                                          term.

202   203   204

201            ┌────┬────┬────┐         205
              │ idC│ idS│inst.│──┐
┌──────┐       └────┴────┴────┘  │    ┌──────────┐        206
│ maj. │──────────────────────────────│ recherche│──┐
└──────┘                              │    c     │
                                      └──────────┘
                                            │
                                            ▼
                          207 ◇ identifié ?   KO    ┌────┐   208
                                            │       │ Fin│
                                           OK       └────┘
                                            │
                                            ▼
                        209 ◇ auth. ?   non
213                 212         │
                               oui
┌──────────┐   ┌────┐     210   ▼
│production│   │aléa│          ┌──────┐
│ réponse  │◄──────────────────│ test │
└──────────┘                   └──────┘
     │    214   ┌────────┐  215
     │     └────│ F (aléa)│     ◇ OK    oui
     └──────────────────────────  ?          211
                               non        ┌──────┐
                                          │ maj. │
          Fig. 2                          └──────┘
                                            │
                                            ▼
                                          ┌────┐
                                          │ Fin│
                                          └────┘
                                            216

cons.                    mand.                    term.

**Fig. 3**

**Fig. 4**

-400-

**EP 1 909 462 B1**

**RÉFÉRENCES CITÉES DANS LA DESCRIPTION**

**Documents brevets cités dans la description**

- EP 1303153 A
- WO 2005076204 A